# EUROPEAN PATENT SPECIFICATION

(11) **EP 2 584 157 B1**
(45) Date of publication and mention of the grant of the patent: **30.04.2014**
(21) Application number: 12188587.5
(22) Date of filing: 15.10.2012
(51) Int. Cl.: F01K 7/18, F01K 7/22, F01K 23/10, F01K 23/14

(54) **Heat recovery steam generator and methods of coupling same to a combined cycle power plant**
Wärmerückgewinnungsdampfgenerator und Verfahren zum Ankoppeln desselben an einem Kombikraftwerk
Générateur de vapeur à récupération de chaleur et procédés de couplage associés à une centrale à cycles combinés

(30) Priority: 19.10.2011 US 201113276602
(43) Date of publication of application: 24.04.2013
(73) Proprietor: General Electric Company, Schenectady, NY 12345 (US)
(72) Inventor: Raja, Himanshu, 560066 Banagaore, Karnataka (IN); Mundra, Kamlesh, Clifton Park, NY New York 12065 (US); Sholes, John Edward, Greenville, SC South Carolina 29615 (US); Vivekanandhan, M., 560066 Bangalore, Karnataka (IN)
(74) Representative: Cleary, Fidelma

(56) References cited:
- EP-A2- 1 179 664
- EP-A2- 1 205 641
- DE-A1-102008 037 410
- JP-A- 9 177 565
- JP-A- 10 018 809

## Description

### BACKGROUND OF THE INVENTION

Combined cycle power plants in the power generation industry make use of one or more gas turbines as well as one or more steam turbines to drive one or more generators that produce electricity. The exhaust gases from the gas turbine(s) are used as a heat source to create steam which drives one or more steam turbines. One or more heat recovery steam generators extract heat energy from the exhaust gas from the gas turbine(s) and create the steam used in the steam turbines.

A typical heat recovery steam generator includes an inlet for receiving the exhaust gases from the gas turbine and an outlet which exhausts the gases received from the gas turbine after heat energy has been extracted from the exhaust gases. Between the inlet and outlet is a flow path, in which multiple heat exchanger devices are located. The heat exchanger devices extract heat from the exhaust gas from the gas turbine as it travels from the inlet to the outlet.

The heat exchanger devices within a heat recovery steam generator are organized in a particular pattern or order within the flow path between the inlet and the outlet. Typically, the heat exchanger devices include a low pressure evaporator, an intermediate pressure evaporator, and a high pressure evaporator. The heat recovery steam generator may also include one or more economizers which preheat water before the water is delivered into one of the evaporators. Further, the heat recovery steam generator can include one or more superheaters which further heat steam produced by one of the evaporators. Finally, a variety of additional heat exchange elements can also be included at various locations along the flow path for various purposes. An example of heat exchanger devices is disclosed in DE-10 2008 037 410-A.

Although a heat recovery steam generator effectively extracts heat energy from the exhaust gas of a gas turbine in order to produce steam which drives one or more steam turbines, the way in which the various heat exchange elements are arranged and coupled to the other elements of a combined cycle power plant does not result in the greatest possible overall efficiency for the combined cycle power plant.

### BRIEF DESCRIPTION OF THE INVENTION

In a first aspect, the invention is embodied in a heat recovery steam generator for a combined cycle power plant. The heat recovery steam generator includes an inlet that receives exhaust gas from a gas turbine, an outlet that exhausts the gas received at the inlet, and a plurality of heat exchanger units located along an exhaust gas flow path that extends from the inlet to the outlet. The heat exchanger units include a high pressure evaporator and an intermediate pressure evaporator. Also, a first intermediate pressure superheater is located downstream of the high pressure evaporator along the flow path between the inlet and the outlet, the first intermediate pressure superheater receiving steam output from the intermediate pressure evaporator. The heat recovery steam generator also includes a second intermediate pressure superheater located upstream of the high pressure evaporator, wherein the second intermediate pressure superheater receives steam from the first intermediate pressure superheater. Further, a first reheater is located upstream of the high pressure evaporator, the first reheater receiving exhaust steam from a high pressure steam turbine. Finally, the heat recovery steam generator also includes a second reheater located upstream of the first reheater, wherein the second reheater receives steam from the first reheater.

In a second aspect, the invention is embodied in a method of connecting elements of a heat recovery steam generator to elements of a combined cycle power plant. The heat recovery steam generator includes an inlet that receives exhaust gas from a gas turbine, an outlet that exhausts the gas received at the inlet, and a plurality of heat exchanger units located along an exhaust gas flow path that extends from the inlet to the outlet. The heat exchanger units include a high pressure evaporator and an intermediate pressure evaporator. A first intermediate pressure superheater is located downstream of the high pressure evaporator, and the first intermediate pressure superheater receives steam output from the intermediate pressure evaporator. A second intermediate pressure superheater is located upstream of the high pressure evaporator, and the second intermediate pressure superheater receives steam from the first intermediate pressure superheater. A first reheater is located upstream of the high pressure evaporator, and a second reheater is located upstream of the first reheater. The second reheater receives steam from the first reheater. The method includes coupling the inlet of the heat recovery steam generator to an outlet of a gas turbine, coupling an outlet of a high pressure steam turbine to an inlet of the first reheater, and coupling outlets of the second reheater and the second intermediate pressure superheater to at least one inlet of an intermediate pressure steam turbine.

### BRIEF DESCRIPTION OF THE DRAWINGS

Embodiments of the present invention will now be described, by way of example only, with reference to the accompanying drawings in which:
FIGURE 1 is a diagram illustrating a typical prior art heat recovery steam generator connected to elements of a combined cycle power plant;
FIGURE 2 is a diagram illustrating a first heat recovery steam generator embodying the invention connected to elements of a combined cycle power plant;
FIGURE 3 is a diagram illustrating a second heat recovery steam generator embodying the invention connected to elements of a combined cycle power plant;
FIGURE 4 is a diagram of a third heat recovery steam generator embodying the invention connected to elements of a combined cycle power plant;
FIGURE 5 is a diagram illustrating a fourth heat recovery steam generator embodying the invention connected to elements of a combined cycle power plant; and
FIGURE 6 is a diagram illustrating a fifth heat recovery steam generator embodying the invention connected to elements of a combined cycle power plant.

### DETAILED DESCRIPTION OF THE INVENTION

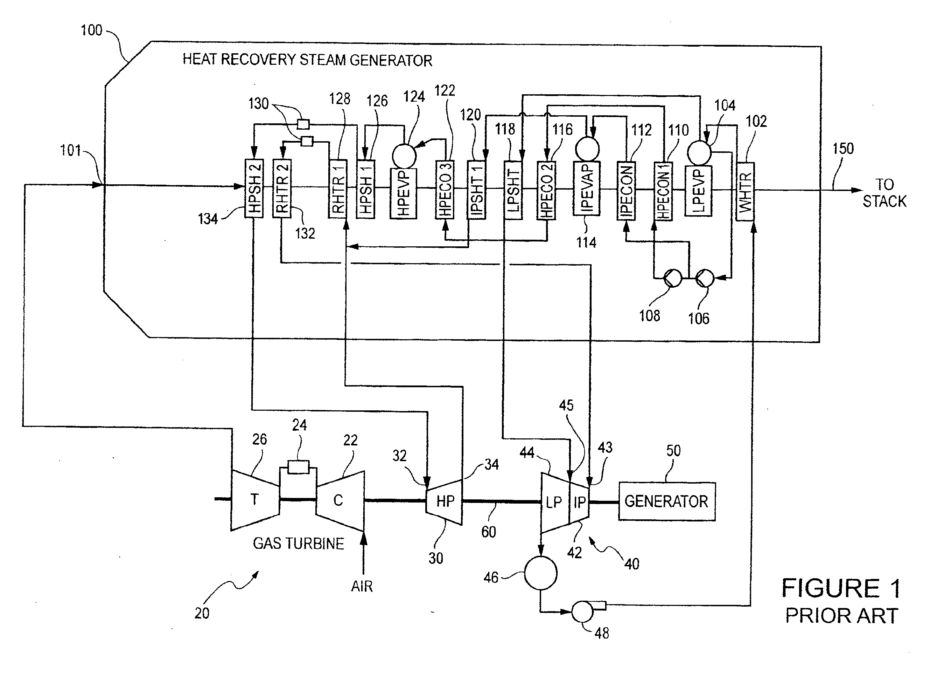

Figure 1 depicts a typical prior art heat recovery steam generator 100 connected to elements of a combined cycle power plant. As shown therein, a gas turbine 20 includes a compressor section 22, a combustor section 24, and a turbine section 26. All or a portion of the exhaust gases from the turbine section 26 are routed to an inlet 101 of the heat recovery steam generator 100.

The combined cycle power plant also includes a high pressure steam turbine 30 which receives steam from the heat recovery steam generator 100 at an inlet 32. Exhaust steam from the high pressure steam turbine 30 exits the high pressure steam turbine 30 at an outlet 34, and the steam is conveyed back to the heat recovery steam generator 100. Some combined cycle power plants also include a low pressure and/or intermediate pressure steam turbine 40. An inlet 43 of the low/intermediate pressure steam turbine 40 also receives steam from the heat recovery steam generator 100. The output of the low/intermediate pressure steam turbine 40 is routed to a condenser or a collector 46, which converts the steam into water. A feed pump 48 then pumps the water back to the heat recovery steam generator 100.

Figure 1 illustrates a low/intermediate pressure steam turbine 40 which includes an intermediate pressure section 42 and a low pressure section 44. The intermediate pressure section 42 receives intermediate pressure steam at an intermediate pressure inlet 43. The low pressure section 44 receives low pressure steam at a low pressure steam inlet 45.

In alternate embodiments, only a single low pressure steam turbine or a single intermediate pressure steam turbine could be provided. Alternatively, both a low pressure steam turbine and a separate intermediate pressure steam turbine could be provided.

Figure 1 also illustrates a generator 50 connected to a common shaft 60 which runs through the gas turbine 20, the high pressure steam turbine 30 and the low/intermediate pressure steam turbine 40. In alternate embodiments, a gas turbine 20 could drive a first generator, and the high pressure and low/intermediate pressure steam turbines could drive a second generator. In still other alternative embodiments, a high pressure steam turbine could drive a second generator, and a low/intermediate pressure steam turbine could drive a third generator.

The heat recovery steam generator includes an inlet 101 which receives all or a portion of the gas exhausted from the turbine section 26 of the gas turbine 20. The exhaust gas flows from the inlet 101 to an outlet 150 along a flow path. Positioned along the flow path are a plurality of different heat exchanger devices. The heat exchanger devices are used to extract heat energy from the exhaust gases, and the heat energy is used to generate steam which drives one or more steam turbines used to produce electricity.

The exhaust gas received from the gas turbine 20 will gradually give up its heat energy as it passes from the inlet 101 to the outlet 150. The heat exchanger devices are arranged in a particular order between the inlet 101 and the outlet 150 depending upon their purpose or function. Those heat exchanger elements used to create the hottest and highest pressure steam are positioned adjacent to the inlet 101, where the temperature of the exhaust gases is the highest. Those heat exchanger elements which create lower temperature and lower pressure steam are positioned closer to the outlet 150 of the heat recovery steam generator, where the temperature of the exhaust gases is lowest.

As noted above, condensed water from a low/intermediate pressure steam turbine 40 is pumped to the heat recovery steam generator 100. This water is received at a water heater 102 positioned at the downstream end of the flow path within the heat recovery steam generator. Relatively low temperature exhaust gases at this location are used to heat the water before the water is provided to an evaporator.

As illustrated in Figure 1, the heated water from the water heater 102 is provided to a low pressure evaporator 104. The low pressure evaporator 104 produces low pressure steam which is routed to a low pressure superheater 118. The low pressure superheater 118 is positioned further upstream in the flow path of the exhaust gases than the low pressure evaporator 104. As a result, the low pressure superheater 118 can raise the steam produced by the low pressure evaporator 104 to a higher temperature/pressure. The superheated low pressure steam produced by the low pressure superheater 118 is then provided to the low pressure inlet 45 of the low/intermediate pressure steam turbine 40

Heated water may also be extracted from the low pressure evaporator 104 and sent to one or more feed water pumps 106, 108. The feed water pumps 106, 108 feed heated water to a first high pressure economizer 110. The water is then routed from the first high pressure economizer 110 to a second high pressure economizer 116 located further upstream, which can raise the water to a higher temperature. The water is then routed to a third high pressure economizer 122 located even farther upstream so that the temperature of the water can be raised even higher. The water is then routed into the high pressure evaporator 124.

The high pressure evaporator 124 produces high pressure steam and that steam is provided to a first high pressure superheater 126. The superheated steam is then routed to a second high pressure superheater 134 positioned even further upstream in the flow path so that the steam can be raised to an even higher pressure/temperature. The superheated steam produced by the second high pressure superheater 134 is then routed to the inlet 32 of a high pressure steam turbine 30.

The heat recovery steam generator 100 also produces intermediate pressure steam used to drive either a low/intermediate pressure steam turbine 40, or a separate intermediate pressure steam turbine. To obtain the intermediate pressure steam, feed water is first sent to an intermediate pressure economizer 112 which is located towards the downstream end of the exhaust gas flow path. Water from the intermediate pressure economizer 112 is then sent to an intermediate pressure evaporator 114. Steam produced by the intermediate pressure evaporator 114 is sent to an intermediate pressure superheater 120 located farther upstream in the flow path.

The steam produced by the intermediate pressure superheater 120 is then mixed with steam exhausted from the outlet 34 of the high pressure steam turbine 30. This mixture of steam is received in a first reheater 128 located relatively far upstream in the flow path, where the mixture of steam is raised to a higher temperature/pressure. The steam produced by the first reheater 128 is then sent to a second reheater 132 which is located even further upstream in a flow path. The steam exiting the second reheater 132 is then routed to an intermediate pressure steam turbine, or to the intermediate pressure inlet 43 of a combined low/intermediate pressure steam turbine 40.

Figure 1 also illustrates that an attemporator 130 may be located along the flow path between the first high pressure superheater 126 and the second high pressure superheater 134, as well as in the flow path between the first reheater 128 and the second reheater 132. The attemporators are used to control the temperature and pressure of the steam.

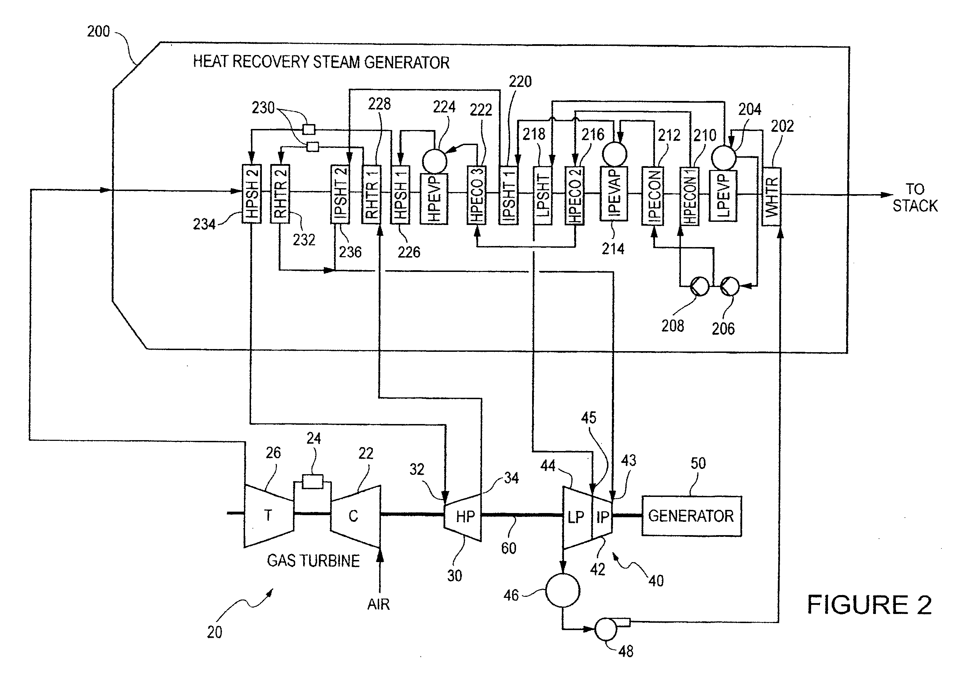

Figure 2 illustrates a first heat recovery steam generator embodying the invention. Because many of the elements and connections in this first embodiment are the same as in the prior art system shown in Figure 1, only the differences between this first embodiment and a typical prior art system as illustrated in Figure 1 are discussed below.

As noted above, in a typical prior art heat recovery steam generator, the steam output by an intermediate pressure superheater is mixed with the steam output from the outlet of a high pressure steam turbine, and the combined steam is input into a first reheater located relatively far upstream in the flow path through the heat recovery steam generator. The inventors have found that if the steam produced by the intermediate pressure superheater is kept separate from the steam produced at the outlet of the high pressure steam turbine, and the intermediate pressure steam produced by the intermediate pressure superheater is sent through a second intermediate pressure superheater located relatively far upstream within the heat recovery steam generator, a greater overall energy efficiency can be obtained for the combined cycle power plant.

In the embodiment illustrated in Figure 2, the output of an intermediate pressure evaporator 214 is routed to a first intermediate pressure superheater 220. The output of the first intermediate pressure superheater 220 is then routed to a second intermediate pressure superheater 236 located upstream of the high pressure evaporator 224.

The steam output from the outlet 34 of the high pressure steam turbine 30 is still routed to a first reheater 228, which is also located upstream of the high pressure evaporator 224. The output of the first reheater 228 is still routed through a second reheater 232 located further upstream.

Finally, the output of the second reheater 232 and the output of the second intermediate pressure superheater 236 is combined and routed to an intermediate pressure inlet 43 of a combined low/intermediate pressure steam turbine 40. Alternatively, the combined steam could be routed to a separate intermediate pressure steam turbine.

When a second intermediate pressure superheater 236 is provided upstream of the high pressure evaporator, as illustrated in Figure 2, and when the steam generated by the second intermediate pressure superheater 236 is mixed with the steam produced by the second reheater 232, a greater overall energy efficiency can be obtained for the combined cycle power plant.

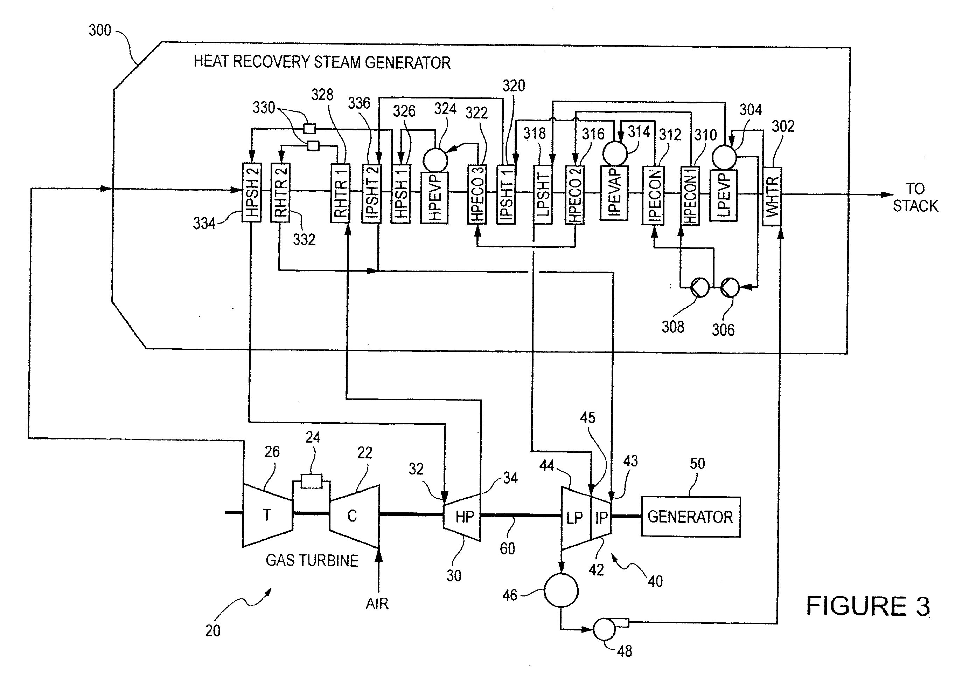

In the embodiment illustrated in Figure 2, the second intermediate pressure superheater 236 is located upstream of the first reheater 228 in the exhaust gas flow path through the heat recovery steam generator. Figure 3 depicts an alternate embodiment where a second intermediate pressure superheater 336 is located downstream from a first reheater 328 that receives the steam exhausted from the high pressure steam turbine 30. Other than the reversal of the positions of the second intermediate pressure superheater 336 and the first reheater 328, all other aspects of the embodiment illustrated in Figure 3 are similar to the embodiment illustrated in Figure 2.

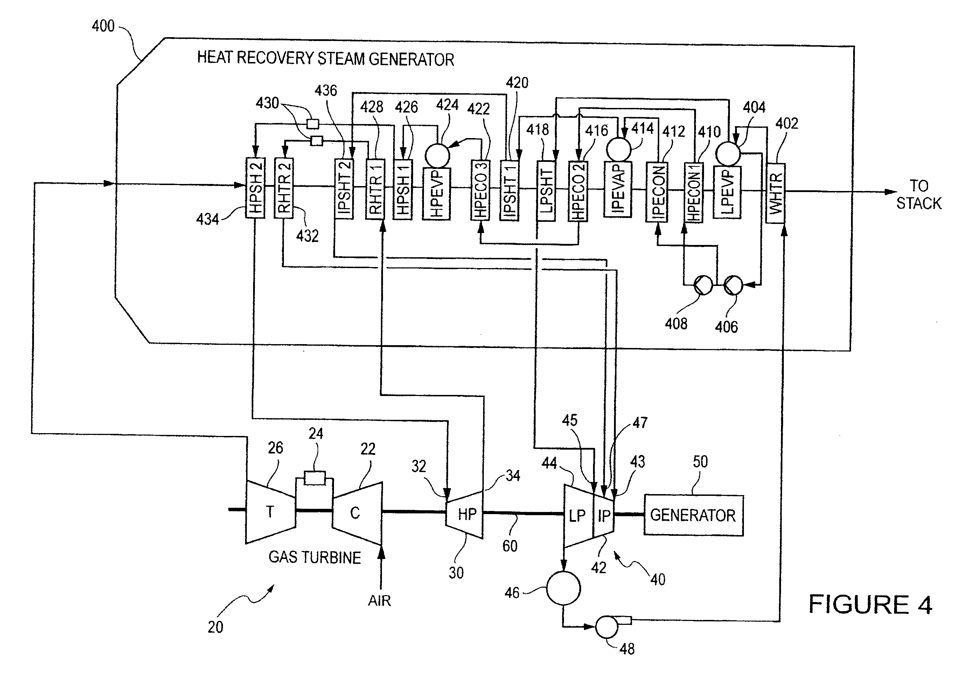

In the embodiments illustrated in Figures 2 and 3, the steam produced by a second intermediate pressure superheater 236/336 and the second reheater 228/328 is combined to create intermediate pressure steam that is provided to the intermediate pressure inlet of a steam turbine. However, because of the different relative locations of the second intermediate pressure superheater 236/336 and the second reheater 228/328 along the exhaust gas flow path, the temperature and pressure of the steam produced by these two devices may be different. Figure 4 illustrates an embodiment which takes advantage of this fact.

In the embodiment illustrated in Figure 4, a second intermediate pressure superheater 436 receives steam from a first intermediate pressure superheater 420 connected to the output of an intermediate pressure evaporator 414. The second intermediate pressure superheater 436 produces intermediate pressure steam at a first temperature and a first pressure.

In addition, as in the previously described embodiments, a first reheater 428 receives steam output from a high pressure steam turbine 30. The outlet of the first reheater 428 is provided to a second reheater 432. And the second reheater 432 produces intermediate pressure steam at a second temperature and a second pressure.

Because the second reheater 432 is positioned farther upstream in the exhaust gas flow path through the heat recovery steam generator 400, the second reheater 432 may be capable of producing intermediate pressure steam which is at a higher temperature and/or pressure than the intermediate pressure steam produced by the second intermediate pressure superheater 436.

In the embodiment illustrated in Figure 4, the intermediate pressure steam produced by the second reheater 432 is provided to a first intermediate pressure inlet 43 of the low/intermediate pressure steam turbine 40. In addition, the intermediate pressure steam produced by the second intermediate pressure superheater 436 is provided to a second inlet 47 of the low/intermediate pressure steam turbine 40.

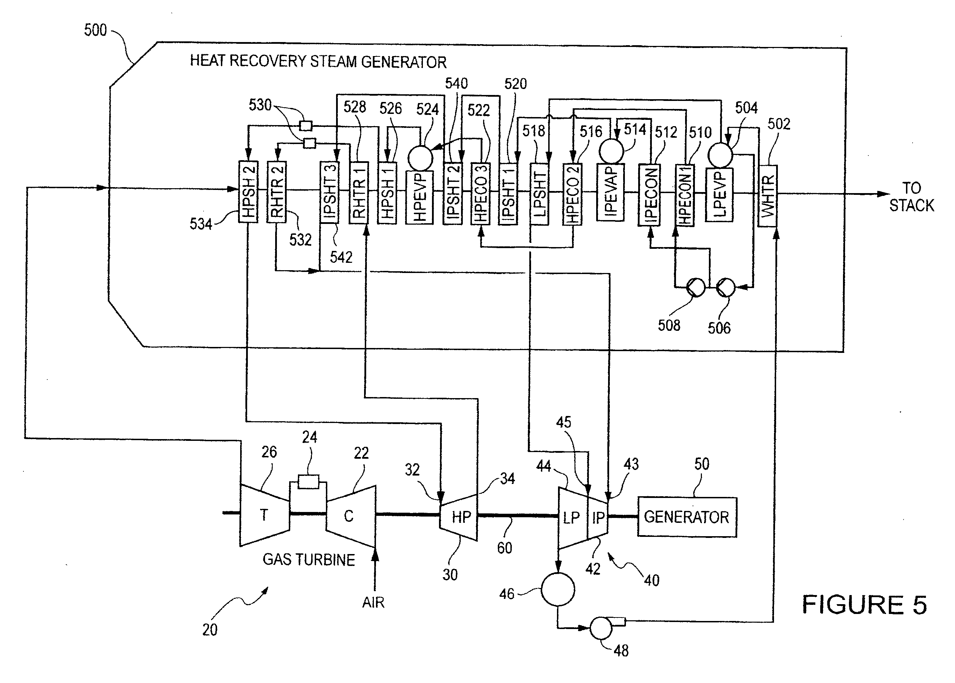

Although the embodiments illustrated in Figures 2-4 can provide a greater overall energy efficiency relative to the prior art system as illustrated in Figure 1, it may be possible to achieve even greater overall efficiency through the provision of a third intermediate pressure superheater. Figure 5 illustrates one such embodiment.

As shown in Figure 5, intermediate pressure steam produced by an intermediate pressure evaporator 514 is routed to a first intermediate pressure superheater 520. The steam output by the first intermediate pressure superheater 520 is routed to a second intermediate pressure superheater 540 which is located downstream of the high pressure evaporator 524, but upstream from the first intermediate pressure superheater 520. The steam output by the second intermediate pressure superheater 540 is then routed to a third intermediate pressure superheater 542 located upstream of the high pressure evaporator 524.

An embodiment as illustrated in Figure 5, which includes three intermediate pressure superheaters, can provide even greater overall efficiency for the combined cycle power plant than the previously described embodiments which included only two intermediate pressure superheaters.

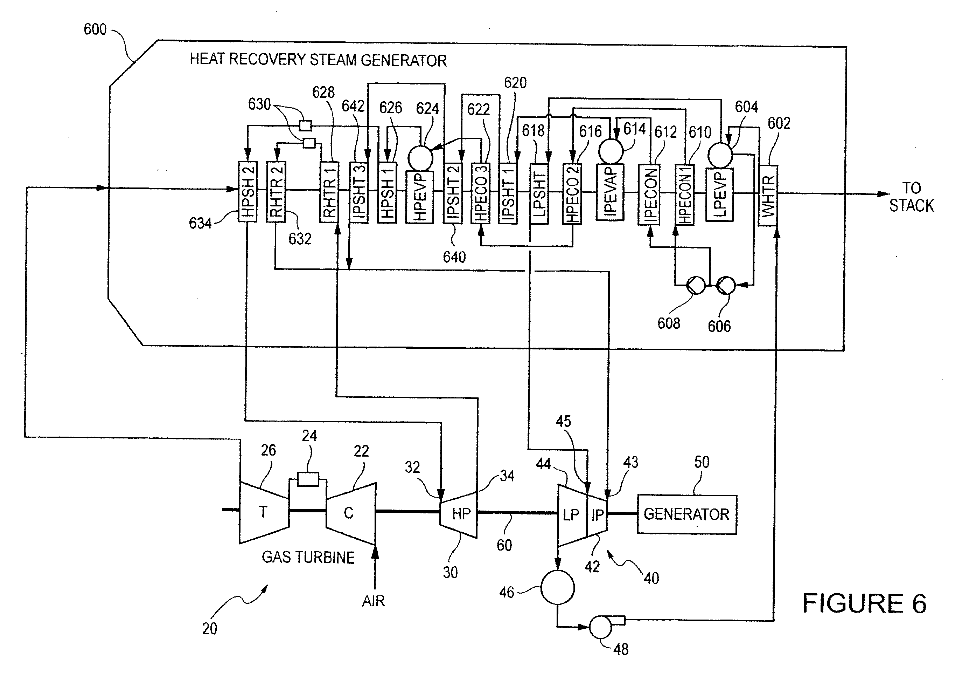

Figure 6 illustrates another embodiment which includes three intermediate pressure superheaters. However, in this embodiment, the third intermediate pressure superheater 642 is located downstream of the first reheater 628 that receives steam output from the high pressure steam turbine 30. Other than this change, the embodiment illustrated in Figure 6 is similar to the embodiment illustrated in Figure 5.

In the embodiments illustrated in Figures 5 and 6, the steam produced by the third intermediate pressure superheater 542/642 is mixed with the output of a second reheater 532/632, and the combined intermediate pressure steam is fed to the intermediate pressure inlet 43 of the low/intermediate pressure steam turbine 40. However, in alternate embodiments, the steam produced by the third intermediate pressure superheater 542/642 could be kept separate from the steam produced by the second reheater 532/632, and the separate flows of intermediate pressure steam could be provided to different inlets of an intermediate pressure steam turbine, as in the embodiment shown in Figure 4.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the scope of the appended claims.

## Claims

1. A heat recovery steam generator (100) for a combined cycle power plant, wherein the heat recovery steam generator (100) includes an inlet (101) that receives exhaust gas from a gas turbine (20), an outlet (150) that exhausts the gas received at the inlet (32), and a plurality of heat exchanger units located along an exhaust gas flow path that extends from the inlet (101) to the outlet (150), wherein the heat exchanger units comprise:
a high pressure evaporator (224);
an intermediate pressure evaporator (214);
a first intermediate pressure superheater (220) located downstream of the high pressure evaporator (224) along the flow path between the inlet (101) and the outlet (150), wherein the first intermediate pressure superheater (220) receives steam output from the intermediate pressure evaporator (214);
a first reheater (228) located upstream of the high pressure evaporator (224), wherein the first reheater (228) receives exhaust steam from a high pressure steam turbine (30); and
a second reheater (232) located upstream of the first reheater (228), wherein the second reheater (232) receives steam from the first reheater (228);
and **characterized in that** the heat exchanger units further comprises
a second intermediate pressure superheater (236) located upstream of the high pressure evaporator (224), wherein the second intermediate pressure superheater (134) receives steam from the first intermediate pressure superheater (120);

2. The heat recovery steam generator of claim 1, further comprising a third intermediate pressure superheater (542) located upstream of the first intermediate pressure superheater (520) and downstream of the high pressure evaporator (524), wherein the third intermediate pressure superheater (542) receives steam from the first intermediate pressure superheater (520), and wherein the second intermediate pressure superheater (540) receives steam from the third intermediate pressure superheater (542).

3. The heat recovery steam generator of claim 1 or 2, wherein steam from the second intermediate pressure superheater (236) and steam from the second reheater (232) are mixed and provided at an intermediate pressure outlet (43).

4. The heat recovery steam generator of any of claims 1 to 3, wherein the second intermediate pressure superheater (234) is located upstream of the first reheater (228).

5. The heat recovery steam generator of any of claims 1 to 3, wherein the second intermediate pressure superheater (336) is located downstream of the first reheater (328).

6. The heat recovery steam generator of any of claims 1 to 5, wherein steam from the second intermediate pressure superheater (236) is provided at a first intermediate pressure outlet (43), and wherein steam from the second reheater (232) is provided at a second intermediate pressure outlet (47).

7. The heat recovery steam generator of claim 6, wherein the steam provided at the second intermediate pressure outlet (47) is at a higher temperature or pressure than the steam provided at the first intermediate pressure outlet (43).

8. A method of connecting elements of a heat recovery steam generator (100) to elements of a combined cycle power plant, the heat recovery steam generator including an inlet (101) that receives exhaust gas from a gas turbine (20), an outlet (150) that exhausts the gas received at the inlet (101), and a plurality of heat exchanger units located along an exhaust gas flow path that extends from the inlet (101) to the outlet (150), the heat exchanger units including a high pressure evaporator (224), an intermediate pressure evaporator (214), a first intermediate pressure superheater (220) located downstream of the high pressure evaporator (214), wherein the first intermediate pressure superheater (220) receives steam output from the intermediate pressure evaporator (214), a second intermediate pressure superheater (236) located upstream of the high pressure evaporator (224), wherein the second intermediate pressure superheater (236) receives steam from the first intermediate pressure superheater (220), a first reheater (228) located upstream of the high pressure evaporator, (224) and a second reheater (232) located upstream of the first reheater (228), wherein the second reheater (232) receives steam from the first reheater (228), the method comprising:
coupling the inlet (101) of the heat recovery steam generator (100) to an outlet (34) of a gas turbine;
coupling an outlet (34) of a high pressure steam turbine (30) to an inlet of the first reheater (228); and
coupling outlets of the second reheater (232) and the second intermediate pressure superheater (236) to at least one inlet (43) of an intermediate pressure steam turbine (40).

9. The method of claim 8, wherein the step of coupling outlets of the second reheater (232) and the second intermediate pressure superheater (236) to at least one inlet (43) of an intermediate pressure steam turbine (40) comprises:
coupling an outlet of the second reheater (232) to a first inlet (43) of the intermediate pressure steam turbine (40); and
coupling an outlet of the second intermediate pressure superheater (232) to a second inlet (47) of the intermediate pressure steam turbine (40).

## Patentansprüche

1. Dampferzeuger mit Wärmerückgewinnung (100) für ein Gas- und Dampfkraftwerk, wobei der Dampferzeuger mit Wärmerückgewinnung (100) umfasst: einen Einlass (101), dem Abgas aus einer Gasturbine (20) zugeführt wird, einen Auslass (150), der das dem Einlass (32) zugeführte Gas abgibt, und eine Mehrzahl von Wärmetauschereinheiten, die sich entlang eines vom Einlass (101) zum Auslass (150) verlaufenden Abgasströmungswegs befinden, wobei die Wärmetauschereinheiten umfassen:
einen Hochdruckverdampfer (224);
einen Mitteldruckverdampfer (214);
einen ersten Mitteldrucküberhitzer (220), der dem Hochdruckverdampfer (224) entlang des Strömungswegs zwischen dem Einlass (101) und dem Auslass (150) nachgeschaltet ist, wobei dem ersten Mitteldrucküberhitzer (220) aus dem Mitteldruckverdampfer (214) abgegebener Dampf zugeführt wird;
einen ersten Zwischenüberhitzer (228), der dem Hochdruckverdampfer (224) vorgeschaltet ist, wobei dem ersten Zwischenüberhitzer (228) Abdampf aus einer Hochdruckdampfturbine (30) zugeführt wird; und
einen zweiten Zwischenüberhitzer (232), der dem ersten Zwischenüberhitzer (228) vorgeschaltet ist, wobei dem zweiten Zwischenüberhitzer (232) Dampf aus dem ersten Zwischenüberhitzer (228) zugeführt wird;
und **dadurch gekennzeichnet, dass** die Wärmetauschereinheiten weiterhin einen zweiten Mitteldrucküberhitzer (236) umfassen, der dem Hochdruckverdampfer (224) vorgeschaltet ist, wobei dem zweiten Mitteldrucküberhitzer (134) Dampf aus dem ersten Mitteldrucküberhitzer (120) zugeführt wird.

2. Dampferzeuger mit Wärmerückgewinnung nach Anspruch 1, der weiterhin einen dritten Mitteldrucküberhitzer (542) umfasst, der dem ersten Mitteldrucküberhitzer (520) vorgeschaltet und dem Hochdruckverdampfer (524) nachgeschaltet ist, wobei dem dritten Mitteldrucküberhitzer (542) Dampf aus dem ersten Mitteldrucküberhitzer (520) zugeführt wird und dem zweiten Mitteldrucküberhitzer (540) Dampf aus dem dritten Mitteldrucküberhitzer (542) zugeführt wird.

3. Dampferzeuger mit Wärmerückgewinnung nach Anspruch 1 oder 2, wobei Dampf aus dem zweiten Mitteldrucküberhitzer (236) und Dampf aus dem zweiten Zwischenüberhitzer (232) gemischt und an einem Mitteldruckauslass (43) bereitgestellt wird.

4. Dampferzeuger mit Wärmerückgewinnung nach einem der Ansprüche 1 bis 3, wobei der zweite Mitteldrucküberhitzer (234) dem ersten Zwischenüberhitzer (228) vorgeschaltet ist.

5. Dampferzeuger mit Wärmerückgewinnung nach einem der Ansprüche 1 bis 3, wobei der zweite Mitteldrucküberhitzer (336) dem ersten Zwischenüberhitzer (328) nachgeschaltet ist.

6. Dampferzeuger mit Wärmerückgewinnung nach einem der Ansprüche 1 bis 5, wobei Dampf aus dem zweiten Mitteldrucküberhitzer (236) an einem ersten Mitteldruckauslass (43) bereitgestellt wird und wobei Dampf aus dem zweiten Zwischenüberhitzer (232) an einem zweiten Mitteldruckauslass (47) bereitgestellt wird.

7. Dampferzeuger mit Wärmerückgewinnung nach Anspruch 6, wobei der am zweiten Mitteldruckauslass (47) bereitgestellte Dampf eine höhere Temperatur oder einen höheren Druck aufweist als der am ersten Mitteldruckauslass (43) bereitgestellte Dampf.

8. Verfahren zur Verbindung von Elementen eines Dampferzeugers mit Wärmerückgewinnung (100) mit Elementen eines Gas- und Dampfkraftwerks, wobei der Dampferzeuger mit Wärmerückgewinnung umfasst: einen Einlass (101), dem Abgas aus einer Gasturbine (20) zugeführt wird, einen Auslass (150), der das dem Einlass (101) zugeführte Gas abgibt, und eine Mehrzahl von Wärmetauschereinheiten, die sich entlang eines vom Einlass (101) zum Auslass (150) verlaufenden Abgasströmungswegs befinden, wobei die Wärmetauschereinheiten umfassen: einen Hochdruckverdampfer (224), einen Mitteldruckverdampfer (214), einen ersten Mitteldrucküberhitzer (220), der dem Hochdruckverdampfer (214) nachgeschaltet ist, wobei dem ersten Mitteldrucküberhitzer (220) aus dem Mitteldruckverdampfer (214) abgegebener Dampf zugeführt wird, einen zweiten Mitteldrucküberhitzer (236), der dem Hochdruckverdampfer (224) vorgeschaltet ist, wobei dem zweiten Mitteldrucküberhitzer (236) Dampf aus dem ersten Mitteldrucküberhitzer (220) zugeführt wird, einen ersten Zwischenüberhitzer (228), der dem Hochdruckverdampfer (224) vorgeschaltet ist, und einen zweiten Zwischenüberhitzer (232), der dem ersten Zwischenüberhitzer (228) vorgeschaltet ist, wobei dem zweiten Zwischenüberhitzer (232) Dampf aus dem ersten Zwischenüberhitzer (228) zugeführt wird, wobei das Verfahren umfasst:
Verbinden des Einlasses (101) des Dampferzeugers mit Wärmerückgewinnung (100) mit einem Auslass (34) einer Gasturbine;
Verbinden eines Auslasses (34) einer Hochdruckdampfturbine (30) mit einem Einlass des ersten Zwischenüberhitzers (228); und
Verbinden von Auslässen des zweiten Zwischenüberhitzers (232) und des zweiten Mitteldrucküberhitzers (236) mit wenigstens einem Einlass (43) einer Mitteldruckdampfturbine (40).

9. Verfahren nach Anspruch 8, wobei der Schritt des Verbindens von Auslässen des zweiten Zwischenüberhitzers (232) und des zweiten Mitteldrucküberhitzers (236) mit wenigstens einem Einlass (43) einer Mitteldruckdampfturbine (40) umfasst:
Verbinden eines Auslasses des zweiten Zwischenüberhitzers (232) mit einem ersten Einlass (43) der Mitteldruckdampfturbine (40); und
Verbinden eines Auslasses des zweiten Mitteldrucküberhitzers (232) mit einem eiten Einlass (47) der Mitteldruckdampfturbine (40).

## Revendications

1. Générateur de vapeur à récupération de chaleur (100) pour une centrale électrique à cycles combinés, dans lequel le générateur de vapeur à récupération de chaleur (100) comprend une entrée (101) qui reçoit du gaz d"échappement d'une turbine à gaz (20), une sortie (150) qui décharge le gaz reçu à l'entrée (32) et une pluralité d'unités échangeuses de chaleur le long d'une voie d'écoulement de gaz d'échappement qui s'étend de l'entrée (101) à la sortie (150), dans lequel les unités échangeuses de chaleur comprennent :
un évaporateur à pression élevée (224) ;
un évaporateur à pression intermédiaire (214) ;
un premier surchauffeur à pression intermédiaire (220) situé en aval de l'évaporateur à pression élevée (224) le long de la voie d'écoulement entre l'entrée (101) et la sortie (150), dans lequel le premier surchauffeur à pression intermédiaire (220) reçoit de la vapeur d'eau délivrée par l'évaporateur à pression intermédiaire (214) ;
un premier resurchauffeur (228) situé en amont de l'évaporateur à pression élevée (224), dans lequel le premier resurchauffeur (228) reçoit de la vapeur d'échappement d'une turbine à vapeur à pression élevée (30) ; et
un second resurchauffeur (232) situé en amont du premier resurchauffeur (228), dans lequel le second resurchauffeur (232) reçoit de la vapeur du premier resurchauffeur (228) ;
et **caractérisé en ce que** les unités échangeuses de chaleur comprennent en outre :
un deuxième surchauffeur à pression intermédiaire (236) situé en amont de l'évaporateur à pression élevée (224), dans lequel le deuxième surchauffeur à pression intermédiaire (134) reçoit de la vapeur du premier surchauffeur à pression intermédiaire (120).

2. Générateur de vapeur à récupération de chaleur selon la revendication 1, comprenant en outre un troisième surchauffeur à pression intermédiaire (542) situé en amont du premier surchauffeur à pression intermédiaire (520) et en aval de l'évaporateur à pression élevée (524), dans lequel le troisième surchauffeur à pression intermédiaire (542) reçoit de la vapeur du premier surchauffeur à pression intermédiaire (520) et dans lequel le deuxième surchauffeur à pression intermédiaire (540) reçoit de la vapeur du troisième surchauffeur à pression intermédiaire (542).

3. Générateur de vapeur à récupération de chaleur selon la revendication 1 ou la revendication 2, dans lequel la vapeur issue du deuxième surchauffeur à pression intermédiaire (236) et la vapeur issue du second resurchauffeur (232) sont mélangées et délivrées à une sortie de pression intermédiaire (43).

4. Générateur de vapeur à récupération de chaleur selon l'une quelconque des revendications 1 à 3, dans lequel le deuxième surchauffeur à pression intermédiaire (234) est situé en amont du premier resurchauffeur (228).

5. Générateur de vapeur à récupération de chaleur selon l'une quelconque des revendications 1 à 3, dans lequel le deuxième surchauffeur à pression intermédiaire (336) est situé en aval du premier resurchauffeur (328).

6. Générateur de vapeur à récupération de chaleur selon l'une quelconque des revendications 1 à 5, dans lequel la vapeur issue du deuxième surchauffeur à pression intermédiaire (236) est fournie à une première sortie à pression intermédiaire (43) et dans lequel la vapeur issue du second resurchauffeur (232) est fournie à une seconde sortie à pression intermédiaire (47).

7. Générateur de vapeur à récupération de chaleur selon la revendication 6, dans lequel la vapeur fournie à la seconde sortie à pression intermédiaire (47) se situe à une température ou une pression plus élevée que celle de la vapeur fournie à la première sortie à pression intermédiaire (43).

8. Procédé de raccordement d'éléments d'un générateur de vapeur à récupération de chaleur (100) à des éléments d'une centrale électrique à cycles combinés, le générateur de vapeur à récupération de chaleur comprenant une entrée (101) qui reçoit du gaz d'échappement d'une turbine à gaz (20), une sortie (150) qui décharge le gaz reçu à l'entrée (101), et une pluralité d'unîtes échangeuses de chaleur situées le long d'une voie d'écoulement de gaz d'échappement qui s'étend de l'entrée (101) à la sortie (150), les unités échangeuses de chaleur comprenant un évaporateur à pression élevée (224), un évaporateur à pression intermédiaire (214), un premier surchauffeur à pression intermédiaire (220) situé en aval de l'évaporateur à pression élevée (214), dans lequel le premier surchauffeur à pression intermédiaire (220) reçoit de la vapeur issue de l'évaporateur à pression intermédiaire (214), un deuxième surchauffeur à pression intermédiaire (236) situé en amont de l'évaporateur à pression élevée (224), dans lequel le deuxième surchauffeur à pression intermédiaire (236) reçoit de la vapeur du premier surchauffeur à pression intermédiaire (220), un premier resurchauffeur (228) situé en amont de l'évaporateur à pression élevée (224) et un second resurchauffeur (232) situé en amont du premier resurchauffeur (228), et dans lequel le second resurchauffeur (232) reçoit de la vapeur du premier resurchauffeur (228), le procédé comprenant les étapes consistant à :
coupler l'entrée (101) du générateur de vapeur à récupération de chaleur (100) à une sortie (34) d'une turbine à gaz ;
coupler une sortie (34) d'une turbine à vapeur à
pression élevée (30) à une entrée du premier resurchauffeur (228) ; et
coupler les sorties du second resurchauffeur (232) et du deuxième surchauffeur à pression intermédiaire (236) à au moins une entrée (43) d'une turbine à vapeur à pression intermédiaire (40).

9. Procécé selon la revendication 8, dans lequel l'étape de couplage des sorties du second resurchauffeur (232) et du deuxième surchauffeur à pression intermédiaire (236) à au moins une entrée (43) d'une turbine à vapeur à pression intermédiaire (40) comprend les étapes consistant à :
coupler une sortie du second resurchauffeur (232) à une première entrée (43) de la turbine à vapeur à pression intermédiaire (40) ; et
coupler une sortie du deuxième surchauffeur à pression intermédiaire (232) à une seconde entrée (47) de la turbine à vapeur à pression intermédiaire (40).
